# EUROPÄISCHE PATENTSCHRIFT

(11) **EP 1 897 164 B1**
(45) Veröffentlichungstag und Bekanntmachung des Hinweises auf die Patenterteilung: **01.01.2014**
(21) Anmeldenummer: 06763825.4
(22) Anmeldetag: 22.06.2006
(51) Int. Cl.: H01M 8/04, H01M 8/10

(54) **VERFAHREN ZUR ZUFÜHRUNG VON BETRIEBSGAS ZU EINEM GASRAUM EINER BRENNSTOFFZELLE SOWIE BRENNSTOFFZELLE**
METHOD FOR SUPPLYING A FEED GAS TO A GAS CHAMBER OF A FUEL CELL AND FUEL CELL
PROCEDE POUR AMENER DU GAZ DE FONCTIONNEMENT DANS UNE CHAMBRE A GAZ D'UNE PILE A COMBUSTIBLE ET PILE A COMBUSTIBLE

(30) Priorität: 28.06.2005 EP 05013970
(43) Veröffentlichungstag der Anmeldung: 12.03.2008
(73) Patentinhaber: Siemens Aktiengesellschaft, 80333 München (DE)
(72) Erfinder: COERLIN, Detlev, 91056 Erlangen (DE); STÜHLER, Walter, 96114 Hirschaid (DE); VOITLEIN, Ottmar, 91475 Lonnerstadt (DE)
(86) Internationale Anmeldenummer: PCT/EP2006/063430
(87) Internationale Veröffentlichungsnummer: WO 2007/000404

(56) Entgegenhaltungen:
- WO-A-2005/053075
- US-A1- 2004 229 088
- US-A1- 2005 123 813

## Beschreibung

Die Erfindung betrifft ein Verfahren zur Zuführung von Betriebsgas zu einem Gasraum einer Brennstoffzelle.

In einer Brennstoffzelle wird üblicherweise durch die Zusammenführung von Wasserstoff und Sauerstoff in einer elektrochemischen Reaktion Energie und Wärme erzeugt, wobei als einziges Nebenprodukt Wasser entsteht. Zu diesem Zweck wird der Wasserstoff in einen Anodengasraum und der Sauerstoff in einen Kathodengasraum der Brennstoffzelle geleitet. Der Wasserstoff kann entweder als reiner Wasserstoff oder als ein wasserstoffhaltiges Brenngas dem Anodengasraum zugeführt werden. Der Sauerstoff kann als reiner Sauerstoff oder auch beispielsweise in Form von Luft dem Kathodengasraum zugeführt werden.

Zum Einschalten der Brennstoffzelle müssen diese Betriebsgase in die noch leeren Gasräume der Brennstoffzelle gebracht werden. Die Zuführung eines Betriebsgases zu einem Gasraum erfolgt meist über eine Gaszuführungsleitung, die mit dem Gasräumen verbunden sind, und in die ein Ventil zum Zuschalten und Abschalten der Gaszufuhr zu dem Gasraum geschaltet ist. Wenn die Gaszuführungsleitung mit einer Gasversorgungseinrichtung verbunden ist, steigt nach Öffnen des Ventiles der Druck in dem Gasraum mit einer Geschwindigkeit, die abhängig ist vom Durchflussquerschnitt des Ventils.

Durch den Druckanstieg in den Gasraum kann es zu mechanischen Beanspruchungen der Zellmembran kommen, die zu Beschädigungen der Zellmembran bis hin zu deren Ausfall führen können. Wenn die Brennstoffzelle Bestandteil eines Brennstoffzellenstapels ist, kann ein derartiger Ausfall einer Zellmembran zum Ausfall des gesamten Brennstoffzellenstapels führen.

Die WO 2005/053075 A beschäftigt sich mit dem Problem, dass bei einer abgeschalteten Brennstoffzelle Luft in die Anode der Brennstoffzelle dringt und sich dort mit dem verbliebenen Wasserstoff mischt. Beim Hochfahren der Brennstoffzelle ohne eine angeschlossene elektrische Last an der Brennstoffzelle kann es deshalb zu einer Korrosion an einem kohlenstoffhaltigen Katalysatorträger der Brennstoffzelle kommen. Ausgangspunkt ist dabei, dass weder Wasserstoff noch Sauerstoff der Brennstoffzelle zugeführt werden. Zunächst wird dann die Wasserstoffzufuhr gestartet. Die Zellspannung wird überwacht: falls diese einen bestimmten Grenzwert überschreitet, wird eine Verschlechterungs-Verhinderungs-Steuerung gestartet. Diese sorgt für eine Zuschaltung einer elektrischen Last, wodurch die Zellspannung reduziert und damit die Kohlenstoffkorrosion verhindert wird. Anschließend wird der Druck des Wasserstoffes am Eingang der Anode erhöht. Hierzu können am Anodenausgang Ventile mit unterschiedlichen Durchflussmengen angeordnet sein, zwischen denen umgeschaltet werden kann. Nach Abschluss der Verschlechterungs-Verhinderungs-Steuerung wird die normale Stromerzeugung gestartet und die jeweils benötigten Mengen an Luft und Wasserstoff der Brennstoffzelle zugeführt.

Die US 2004/229088 A1 beschäftigt sich mit dem bei einem Brennstoffzellensystem mit einer Wasserstoff-Rezirkulationsleitung bestehenden Problem, dass bei einem Abschalten des Brennstoffzellensystems Stickstoff von der Kathodenseite der Brennstoffzelle auf deren Anodenseite und somit in die Zirkulationsleitung gelangt. Beim Wiederanschalten des Brennstoffzellensystems wird dieser Stickstoff zusammen mit Wasserstoff anodenseitig der Brennstoffzelle zugeführt und führt zu Störungen in der elektrochemischen Reaktion in der Brennstoffzelle und somit zu einer Beeinträchtigung des Startverhaltens des Brennstoffzellensystems. Zur Lösung dieses Problems ist ein Spülventil in der Rezirkulationsleitung vorgesehen, über das beim Anschalten des Brennstoffzellensystems der Stickstoff aus der Rezirkulationsleitung abgeführt wird.

Es ist deshalb Aufgabe vorliegender Erfindung, ein Verfahren zur Zuführung von Betriebsgas zu einem Gasraum einer Brennstoffzelle anzugeben, die es erlauben, unzulässig hohe mechanische Beanspruchungen der Zellmembran aufgrund der Gaszuführung zu dem Gasraum sicher zu vermeiden.

Die Aufgabe wird erfindungsgemäß gelöst durch ein Verfahren gemäß Patentanspruch 1. Vorteilhafte Ausgestaltungen sind jeweils Gegenstand der Unteransprüche.

Die Erfindung geht hierbei von der Erkenntnis aus, dass eine Zellmembran sehr empfindlich auf Druckstöße reagiert und durch solche geschädigt werden kann. Derartige Druckstöße können insbesondere bei einem schnellen Aufbau des Gasdruckes bei Beginn der Gaszufuhr zu einem Gasraum auftreten, wenn sich noch wenige Gas in dem Gasraum befindet. Es ist deshalb erforderlich, den Druck in dem Gasraum langsam aufzubauen. Dies ist besonders wichtig, wenn das Gas in einen evakuierte Gasraum eingeführt wird.

Üblicherweise sind die Gaszuführungsleitungen und darin enthaltene Ventile zum Zuschalten oder Abschalten der Gaszufuhr mit einem relativ großem Querschnitt (z.B. DN25) ausgestattet, da hierüber der gesamte für den Betrieb der Brennstoffzelle bei Volllast notwendige Gasvolumenstrom mit möglichst geringem Druckabfall strömen können muss. Wegen des großen Querschnitts füllen allerdings die Betriebsgase nach dem Öffnen der Ventile bei der Einschaltung die Gasräume sehr schnell, wodurch es zu Druckstößen an der Zellmembran kommt.

Eine Betriebsgaszufuhr bei Volllast mit geringem Druckabfall bei gleichzeitiger Vermeidung von Druckstößen ist dadurch möglich, dass die Zuführung des Betriebsgases zu dem Gasraum zuerst mit einer ersten Druckanstiegsgeschwindigkeit und danach mit einer zweiten Druckanstiegsgeschwindigkeit in dem Gasraum erfolgt, wobei die erste Druckanstiegsgeschwindigkeit kleiner ist als die zweite Druckanstiegsgeschwindigkeit.

Durch die Wahl einer kleineren Druckanstiegsgeschwindigkeit in der ersten Phase der Gaszufuhr zu dem Gasraum, wenn die Zellmembran besonders empfindlich auf Druckstöße reagiert, können Druckstöße wirkungsvoll verhindert werden. Erst nach Überschreiten eines definierbaren Druckniveaus in dem Gasraum kann dann die Zufuhr des Betriebsgases zu dem Gasraum mit einer höheren Druckanstiegsgeschwindigkeit in dem Gasraum erfolgen. Die zweite Druckanstiegsgeschwindigkeit kann beispielsweise durch eine Gaszufuhr zu dem Gasraum mit möglichst geringem Druckabfall, wie sie für den Volllastbetrieb der Brennstoffzelle benötigt wird, bestimmt sein. Durch die Vermeidung von Druckstößen kann die mechanische Beanspruchung der Zellmembran und somit auch die Lebensdauer der Membran verlängert werden.

Gemäß einer ersten vorteilhaften Ausgestaltung des erfindungsgemäßen Verfahrens erfolgt der Übergang von der ersten Druckanstiegsgeschwindigkeit zu der zweiten Druckanstiegsgeschwindigkeit in einem Schritt, d.h. es wird direkt von der kleineren zu der größeren Druckanstiegsgeschwindigkeit umgeschaltet.

Gemäß einer alternativen Ausgestaltung des erfindungsgemäßen Verfahrens erfolgt der Übergang von der ersten Druckanstiegsgeschwindigkeit zu der zweiten Druckanstiegsgeschwindigkeit kontinuierlich.

Bevorzugt wird eine Druckdifferenz zwischen den Gasräumen der Brennstoffzelle erfasst und in Abhängigkeit von dieser Druckdifferenz die Druckanstiegsgeschwindigkeit in zumindest einem der Gasräume, vorzugsweise getrennt für die beiden Gasräume, derart eingestellt, dass ein definierter Grenzwert für die Druckdifferenz nicht überschritten wird. Hierdurch können hohe Druckdifferenzen durch gezielte Einstellung der Betriebsgaszuführungsphasen auf beiden Seiten der Membran vermieden werden, was eine weitere Reduzierung der mechanischen Beanspruchung der Membran und somit eine Verlängerung der Lebensdauer der Membran zufolge hat.

Eine erfindungsgemäße Brennstoffzelle weist Mittel zur Zuführung von Betriebsgas zu einem Gasraum der Brennstoffzelle auf, wobei die Mittel derart ausgebildet sind, dass die Druckanstiegsgeschwindigkeit in dem Gasraum veränderbar ist. Hierdurch kann die Zuführung des Betriebsgases zu dem Gasraum zuerst mit einer ersten Druckanstiegsgeschwindigkeit und dann mit einer zweiten Druckanstiegsgeschwindigkeit in dem Gasraum erfolgen, wobei die erste Druckanstiegsgeschwindigkeit kleiner ist als die zweite Druckanstiegsgeschwindigkeit. Somit können die bereits im Zusammenhang mit dem erfindungsgemäßen Verfahren genannten Vorteile erzielt werden.

Gemäß einer vorteilhaften Ausgestaltung der erfindungsgemäßen Brennstoffzelle umfassen die Mittel eine Gaszuführungsleitung, in die zur Veränderung der Druckanstiegsgeschwindigkeit ein Ventil mit einem kontinuierlich veränderbaren Durchflussquerschnitt, z.B. ein Kugelventil, geschaltet ist. Durch Veränderung des Durchflussquerschnitts kann der Druckabfall über das Ventil beeinflusst und somit besonders einfach die Druckanstiegsgeschwindigkeit in dem Gasraum beeinflusst werden.

Alternativ können die Mittel eine Gaszuführungsleitung umfassen, in die zur Veränderung der Druckanstiegsgeschwindigkeit parallel ein erstes Ventil und ein zweites Ventil geschaltet sind, wobei das erste Ventil einen kleineren Durchflussquerschnitt als das zweite Ventil aufweist. Bei dem zweiten Ventil kann es sich beispielsweise um ein üblicherweise in Gaszufuhrleitungen geschaltetes Betriebsventil mit großem Querschnitt (z.B. DN25) handeln, über dass der gesamte für den Betrieb bei Volllast notwendige Gasvolumenstrom mit möglichst geringem Druckabfall strömen kann. Zur Vermeidung von Druckstößen bei Beginn der Gaszuführung ist parallel zu dem Betriebsventil das erste Ventil mit einem kleinen Querschnitt (z.B.DN2) als Startventil bzw. Bypassventil geschaltet. Die Zuführung des Betriebsgases zu dem Gasraum kann dann dadurch erfolgen, dass zuerst nur das erste Ventil mit dem kleinen Durchflussquerschnitt geöffnet wird, und erst in eine zweiten Schritt, z.B. nach Überschreiten eines definierten Druckniveaus in dem Gasraum, durch Öffnen des Betriebsventils die Gaszufuhr mit großem Durchflussquerschnitt und entsprechend großer Druckanstiegsgeschwindigkeit in dem Gasraum erfolgt.

Bevorzugt umfasst die Brennstoffzelle eine Einrichtung zur Erfassung einer Druckdifferenz zwischen den Gasräumen der Brennstoffzelle und zur Einstellung der Druckanstiegsgeschwindigkeit in zumindest einem der beiden Gasräume in Abhängigkeit von dieser Druckdifferenz derart, dass ein definierter Grenzwert für die Druckdifferenz nicht überschritten wird. Hierdurch können unzulässige hohe Druckdifferenzen an der Zellmembran und damit einhergehende mechanische Beanspruchungen der Zellmembran vermieden und somit eine Verlängerung der Lebensdauer der Membran ermöglicht werden. Vorzugsweise erfolgt die Einstellung der Druckanstiegsgeschwindigkeit getrennt für die einzelnen Gasräume.

Die Erfindung sowie weitere vorteilhafte Ausgestaltungen der Erfindung gemäß Merkmale der Unteransprüche werden im Folgenden anhand von Ausführungsbeispielen in den Figuren näher erläutert. Es zeigen:
- FIG 1: eine erfindungsgemäße Brennstoffzelle und
- FIG 2: eine Darstellung des Druckverlaufs und der Druckanstiegsgeschwindigkeit in den Gasräumen der Brennstoffzelle von FIG 1 beim Einschalten der Gaszufuhr zu der Brennstoffzelle.

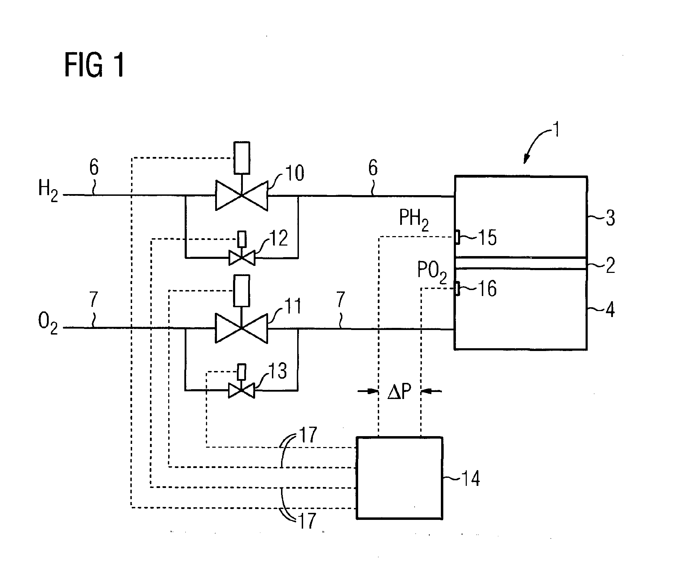

FIG 1 zeigt in prinzipieller Darstellung eine Brennstoffzelle 1 eines nicht näher dargestellten Brennstoffzellensystems. Die Brennstoffzelle 1 weist eine Zellmembran 2 mit einem auf der einen Seite der Zellmembran angrenzendem Anodengasraum 3 und einem auf der anderen Seite der Zellmembran 2 angrenzendem Kathodengasraum 4 auf. Über eine Gaszuführungsleitung 6 erfolgt die Zuführung von Wasserstoff H₂ zu dem Anodengasraum 3 und über eine Gaszuführungsleitung 7 erfolgt die Zufuhr von Sauerstoff O₂ zu dem Kathodengasraum 4. In die Gaszuführungsleitung 6 ist ein Ventil 10 mit einem für die Gasversorgung des Anodengasraums 3 bei Normalbetrieb der Brennstoffzelle 1 geeignet großem Querschnitt geschaltet. Über das Ventil 10 kann der gesamte für den Betrieb bei Volllast notwendige Gasvolumenstrom mit möglichst geringem Druckabfall strömen.

Zusätzlich ist in die Gaszuführungsleitung 6 parallel zu dem Ventil 10 ein Ventil 12 mit einem kleineren Durchflussquerschnitt geschaltet. Dieses Ventil dient als Start bzw. als Bypassventil für die Betriebsgaszufuhr beim Starten der Brennstoffzelle 1.

In entsprechender Weise ist in die Gaszuführungsleitung 7 für den Sauerstoff O₂ ein Ventil 11 mit einem größeren und parallel dazu ein Ventil 13 mit einem kleineren Durchflussquerschnitt geschaltet.

Die Brennstoffzelle 1 umfasst weiterhin eine Einrichtung 14 zur Erfassung einer Druckdifferenz ΔP zwischen den Gasräumen 3, 4. Hierzu ist die Einrichtung 14 mit Drucksensoren 15, 16 in den Gasräumen 3, 4 gekoppelt, wobei der Drucksensor 15 den Druck PH2 des Wasserstoffs H₂ im Anodengasraum 3 und der Drucksensor 16 den Druck P02 des Sauerstoffs O₂ im Anodengasraum 4 erfasst. Mittels der Einrichtung 14 können über Steuerleitungen 17 die Ventile 10, 11, 12, 13 unabhängig voneinander geöffnet oder geschlossen werden.

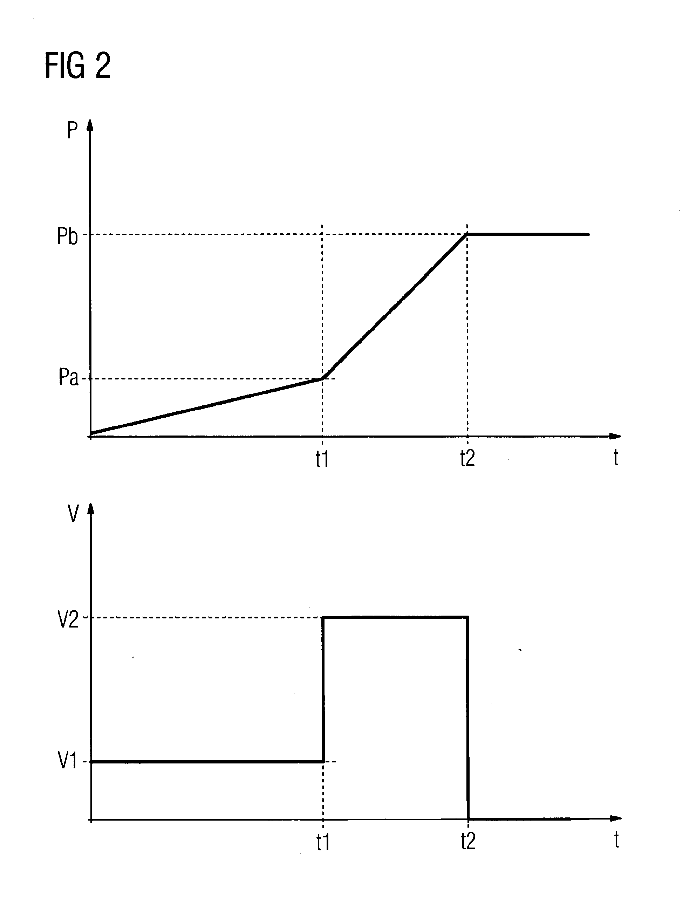

Das Verfahren zur Zufuhr der Betriebsgase zu der Brennstoffzelle 1 beim Einschalten der Brennstoffzelle wird im Folgenden anhand von FIG 2 erläutert. Die FIG 2 zeigt zum einen in einer oberen Darstellung den Verlauf des Druckes P in den Gasräumen 3, 4 der Brennstoffzelle 1 über der Zeit t und in einer unteren Darstellung den Verlauf der Druckanstiegsgeschwindigkeit V in den Gasräumen 3, 4 der Brennstoffzelle 1 über der Zeit t.

Zu Beginn des Einschaltvorganges sind nur die Ventile 12 und 13 mit kleinem Durchflussquerschnitt geöffnet, während die Ventile 10 und 11 mit großem Durchflussquerschnitt geschlossen sind. Aufgrund der geringen Durchflussquerschnitte und des damit verbundenen Druckabfalls an den Ventilen 12 und 13 erfolgt die Zufuhr der Betriebsgase H₂, O₂ zu den Gasräumen 3 und 4 mit entsprechenden niedrigem Druck und somit auch mit einer niedrigen Druckanstiegsgeschwindigkeit V1 in den Gasräumen 3, 4.

Nach Erreichen des Druckes Pa in den Gasräumen 3, 4 zum Zeitpunkt t1 werden zusätzlich die Ventile 10, 11 mit großem Querschnitt geöffnet. Entsprechend werden die Betriebsgase H₂, O₂ den Gasräumen 3, 4 mit einem höheren Druck zugeführt, wodurch die Druckanstiegsgeschwindigkeit in den Gasräumen 3, 4 auf den Wert V2 steigt. Nach Erreichen des Enddruckes Pb zum Zeitpunkt t2 steigt der Druck in den Gasräumen nicht mehr weiter an.

Durch die Einstellung der niedrigeren Druckanstiegsgeschwindigkeit V1 zu Beginn der Zufuhr der Betriebsgase H₂, O₂ zu den Gasräumen werden mechanische Belastungen der Zellmembran 2 aufgrund von Druckstößen weitgehend vermieden. Erst wenn der Druck in den Gasräumen 3, 4 einen vordefinierten Wert Pa erreicht hat, ab dem die Gefahr von Druckstößen verringert ist, wird eine höhere Druckanstiegsgeschwindigkeit V2 zugelassen. Hierdurch wird bei Beginn der Gaszufuhr die mechanische Beanspruchung der Zellmembran 2 reduziert und somit deren Lebensdauer verlängert.

Zusätzlich kann durch die Einrichtung 14 die Druckdifferenz ΔP zwischen den Gasräumen 3, 4 erfasst und in Abhängigkeit von dieser Druckdifferenz ΔP getrennt für beide Gasräume 3, 4 die jeweilige Druckanstiegsgeschwindigkeit derart eingestellt werden, dass ein definierter Grenzwert für die Druckdifferenz ΔP nicht überschritten wird. Die Einstellung der Druckanstiegsgeschwindigkeit erfolgt durch Öffnen oder Schließen der Ventile 10, 11, 12, 13.

Da die Druckdifferenz zwischen den beiden Gasräumen 3, 4 einen bestimmten Grenzwert nicht überschreitet, können mechanische Beanspruchungen der Membran innerhalb bestimmter Grenzen gehalten und somit die Lebensdauer der Membran verlängert werden.

Wie vorstehend erläutert, kann das erfindungsgemäße Verfahren bei der Zufuhr von Betriebsgasen zu beiden Gasräumen einer Brennstoffzelle Anwendung finden, z.B. wenn beide Gasräume evakuiert sind. Das erfindungsgemäße Verfahren kann grundsätzlich aber auch bei der Zufuhr von Betriebsgas zu nur einem der Gasräume einer Brennstoffzelle Anwendung finden, z.B. wenn der andere Gasraum bereits mit Gas gefüllt ist.

Weiterhin kann das erfindungsgemäße Verfahren für die Gaszufuhr zu sämtlichen Brennstoffzellen eines Brennstoffzellenstapels oder Brennstoffzellenblocks Anwendung finden.

Falls sämtliche Brennstoffzellen eines Brennstoffzellenstapels oder Brennstoffzellenblocks über eine einzige Gaszuführungsleitung mit einem Betriebsgas versorgt werden, können im Fall der erfindungsgemäßen Brennstoffzelle die Mittel zur Veränderung der Druckanstiegsgeschwindigkeit auch zur Einstellung des Druckanstiegs in den entsprechenden Gasräumen sämtlicher weiterer Brennstoffzellen des Brennstoffzellenstapels oder Brennstoffzellenblocks verwendet werden.

Weiterhin kann die erfindungsgemäße Brennstoffzelle bzw. das erfindungsgemäße Verfahren in umgekehrter Reihenfolge grundsätzlich auch zur Vermeidung von Druckstößen und Druckdifferenzen und somit mechanischen Belastungen der Membran bei der Gasabfuhr aus der Brennstoffzelle verwendet werden, d.h. die Abführung des Betriebsgases aus einem Gasraum erfolgt zuerst mit einer ersten Druckanstiegsgeschwindigkeit und dann mit einer zweiten Druckanstiegsgeschwindigkeit, wobei die erste Druckanstiegsgeschwindigkeit größer ist als die zweite Druckanstiegsgeschwindigkeit.

## Patentansprüche

1. Verfahren zur Zuführung von Betriebsgas (02) zu einem Anodengasraum (3) und einem Kathodengasraum (4) einer Brennstoffzelle (1) mit einer Zellmembran (2),
**dadurch gekennzeichnet, dass** zur Vermeidung unzulässig hoher mechanischer Beanspruchungen der Zellmembran (2) die Zuführung des Betriebsgases (02) zu dem Kathodengasraum (4) zuerst mit einer ersten Druckanstiegsgeschwindigkeit (V1) und danach mit einer zweiten Druckanstiegsgeschwindigkeit (V2) erfolgt, wobei die erste Druckanstiegsgeschwindigkeit (V1) kleiner ist als die zweite Druckanstiegsgeschwindigkeit (V2).

2. Verfahren nach Anspruch 1,
**dadurch gekennzeichnet, dass** der Übergang von der ersten Druckanstiegsgeschwindigkeit (V1) zu der zweiten Druckanstiegsgeschwindigkeit (V2) in einem Schritt erfolgt.

3. Verfahren nach Anspruch 1,
**dadurch gekennzeichnet, dass** der Übergang von der ersten Druckanstiegsgeschwindigkeit (V1) zu der zweiten Druckanstiegsgeschwindigkeit (V2) kontinuierlich erfolgt.

4. Verfahren nach einem der vorhergehenden Ansprüche,
**dadurch gekennzeichnet, dass** eine Druckdifferenz (ΔP) zwischen den Gasräumen (3, 4) der Brennstoffzelle (1) erfasst und in Abhängigkeit von dieser Druckdifferenz (ΔP) die Druckanstiegsgeschwindigkeit (V) in zumindest dem Kathodengasraum (4) derart eingestellt wird, dass ein definierter Grenzwert für die Druckdifferenz (ΔP) nicht überschritten wird.

5. Verfahren nach einem der vorhergehenden Ansprüche,
**dadurch gekennzeichnet, dass** die Einstellung der Druckanstiegsgeschwindigkeit (V) durch Einstellung des Durchflussquerschnittes in einer Gaszuführungsleitung (7) zu dem Kathodengasraum (4) erfolgt.

## Claims

1. Method for supplying fuel gas (02) to an anode gas chamber (3) and a cathode gas chamber (4) of a fuel cell (1) having a cell membrane 2,
**characterised in that** in order to avoid unacceptably high mechanical stresses on the cell membrane (2) the fuel gas (02) is supplied to the cathode gas chamber (4) initially at a first pressure increase velocity (V1) and subsequently at a second pressure increase velocity (V2), with the first pressure increase velocity (V1) being less than the second pressure increase velocity (V2).

2. Method according to claim 1,
**characterised in that** the transition from the first pressure increase velocity (V1) to the second pressure increase velocity (V2) is accomplished in a single step.

3. Method according to claim 1,
**characterised in that** the transition from the first pressure increase velocity (V1) to the second pressure increase velocity (V2) takes place continuously.

4. Method according to one of the preceding claims,
**characterised in that** a pressure difference (ΔP) between the gas chambers (3, 4) of the fuel cell (1) is measured and, as a function of said pressure difference (ΔP), the pressure increase velocity (V) is set in at least the cathode gas chamber (4) such that a defined limit value for the pressure difference (ΔP) is not exceeded.

5. Method according to one of the preceding claims,
**characterised in that** the pressure increase velocity (V) is set by adjustment of the flow cross-section in a gas supply line (7) to the cathode gas chamber (4).

## Revendications

1. Procédé d'apport de gaz (O2) de fonctionnement à une chambre (3) anodique pour du gaz et à une chambre (4) cathodique pour du gaz d'une pile (1) à combustible ayant une membrane (2) de cellulose,
**caractérisé en ce que**, pour empêcher des sollicitations mécaniques d'une grandeur inadmissible de la membrane (2) de cellulose, on effectue l'apport du gaz (O2) de fonctionnement à la chambre (4) cathodique pour du gaz d'abord une première vitesse (V1) d'élévation de la pression et ensuite à une deuxième vitesse (V2) d'élévation de la pression, la première vitesse (V1) d'élévation de la pression étant plus petite que la deuxième vitesse (V2) d'élévation de la pression.

2. Procédé suivant la revendication 1,
**caractérisé en ce que** le passage de la première vitesse (V1) d'élévation de la pression et la deuxième vitesse (V2) d'élévation de la pression s'effectue en un stade.

3. Procédé suivant la revendication 1,
**caractérisé en ce que** le passage de la première vitesse (V1) d'élévation de la pression et la deuxième vitesse (V2) d'élévation de la pression s'effectue en continu.

4. Procédé suivant l'une des revendications précédentes,
**caractérisé en ce que** l'on détecte une différence (ΔP) de pression entre les chambres (3, 4) pour du gaz de la pile (1) à combustible et on règle, en fonction de cette différence (ΔP) de pression, la vitesse (V) d'élévation de la pression dans au moins la chambre (4) cathodique pour du gaz de manière à ne pas dépasser une valeur limite définie de la différence (ΔP) de pression.

5. Procédé suivant l'une des revendications précédentes,
**caractérisé en ce que** l'on effectue le réglage de la vitesse (V) d'élévation de la pression en réglant la section transversale de passage dans un conduit (7) d'apport de gaz à la chambre (4) cathodique pour du gaz.
